# EUROPEAN PATENT APPLICATION

(11) **EP 1 128 373 A2**
(43) Date of publication of application: **29.08.2001**
(21) Application number: 01301091.3
(22) Date of filing: 07.02.2001
(51) Int. Cl.: G11B 7/125

(54) **Write power calibration in write-once optical disk drives**

(30) Priority: 28.02.2000 US 514538
(71) Applicant: Plasmon LMS, Inc., Colorado Springs, CO 80907 (US)
(72) Inventor: Verboom, Johannes J., Colorado Springs, Colorado 80919 (US)
(74) Representative: Abrams, Michael John

(57) **Abstract**

Write power calibration is efficiently and effectively carried out by writing a predetermined pattern of data to a selected data sector while varying the write power. Subsequently, reading this data and analyzing the signals produced provides a method to optimize the write power level to be used. The data is written in a specific pattern, and consequently produces a desired waveform at an output of the optical drive system. Analysis of this waveform can then be used to correlate an optimum signal value with an optimum write power level. By writing this predetermined pattern in a predetermined data sector, only one data sector is used for each write power calibration operation, thereby minimizing on media consumption. This provides a write power calibration operation which is particularly useful for a write once read many (WORM) drive.

## Description

The present invention relates to optical data storage systems or optical disk drives. More specifically, the present invention relates to the calibration of the write power used in optical disk drives.

In optical disk drives, a laser is used to write information to an optical medium. Over time, the operational characteristics and efficiency of the laser, and all related components, can vary. Consequently, it is necessary to periodically calibrate the write head in order to insure optimum operation.

As mentioned above, a laser is one critical element of an optical disk drive. The laser is used to write data to the optical storage media. Most often, this optical storage media is an optical disk, however other media can be used. The efficiency of the laser can change over time due to both normal and abnormal operating conditions. For example, aging will alter the optical characteristics of the laser, thus affecting its performance. Also, variations or cycles in temperature will also affect the operation of the laser. Consequently, these changes must be taken into account.

In the data writing mechanism, the laser signals must be appropriately directed from the laser to the data medium. This necessarily requires some optical path alignment between the laser and the write medium. Numerous lenses and/or focusing elements are often included in this path alignment. While all efforts are made to keep this path alignment constant, perfect consistency is not realistic. The optical path alignment will vary or change over time due to temperature effects and aging, causing optical aberrations. Further, contamination of the components can also vary the optical aberrations, thus changing its operational characteristics of the write mechanism.

An additional source of inconsistency and variation in the data writing mechanism is the mechanical alignment of the various components. As expected, the laser and all associated optical components must be mechanically attached to various structures within the disk drive. In addition to the inherent variations caused by temperature changes, other phenomena can alter the mechanical alignment. Most obviously, shock and vibration will have effects on this mechanical alignment. All of these things can create variations in the individual components, along with misalignment problems.

All of the above listed variations are caused by physical changes in the particular components. Many of these are naturally expected changes due to aging and use, while others are reasonably expected. Due to all of these variations, it is necessary to calibrate the writing system in the optical drive. Most importantly, it is necessary to calibrate data writing mechanism to appropriately achieve the optimum data writing function. One parameter that must be calibrated is the optimum write power necessary to achieve the most efficient data writing.

In addition to the physical variations in the data writing system, the media itself will have a write sensitivity that is subject to variation. Temperature cycling of the data storage media will change its characteristics. Also, aging can alter the sensitivity. This again suggests the need to calibrate the write power necessary to efficiently write data to optical disks in optical data storage systems.

One common version of an optical data storage medium is the optical disk drive. In these systems, data is written to an optical disk in a well known manner. Specifically, the characteristics of the optical disk are changed at predetermined positions. These changes can then be detected by optical readout systems.

Certain disk drive systems are commonly referred to as WORM drives (Write Once Read Many). In this type of drive, it is important to manage all usable space in order to maximize user writing capacity. Consequently, it is not efficient or desirable to utilize large amounts of disk space to perform calibration functions. Stated alternatively, it is important to minimize the amount of disk space used in any calibration function. Write power calibration functions are no exception. By minimizing the media consumption, additional amounts are available for data storage by the user.

Other drive systems do not have these same data capacity concerns. In rewritable drive systems, this media consumption is not an issue as any track used for calibration can simply be rewritten.

In other system, calibration can be done outside the usable data storage area. Specifically, the edges of the media can be used. Only limited amounts of "edge space" is available however, thus limiting the number of times calibration can be done. Also, this edge space is not ideal for calibration functions as it is likely to include media defects. For example, sputtering may not be consistent in these areas, due to the manufacturing process. Also, stress between the substrates is likely to be higher at these edges.

In order to efficiently calibrate the write power necessary for effective data storage operations, the present invention advantageously provides a unique system and method for write power calibration. Only small amounts of data is actually written to the disk, thus minimizing the amount of storage media utilized. Also, efficient calibration is achieved for the entire media without concern for edge variations.

According to one aspect of the present invention, there is provided a method of performing calibration of an optical storage system, comprising the steps of: i) setting the write power of a data writing element to a default value; ii) writing a first portion of a predetermined calibration data set to the optical storage media in a predetermined manner; iii) modifying the write power of the data writing element to a predetermined value; iv) writing a second portion of the predetermined calibration data set to the optical storage media in the predetermined manner; v) reading the predetermined calibration data set and storing a waveform data set for each portion of the predetermined calibration data set; vi) analyzing the waveform data set and identifying which portion thereof most closely matches an optimum waveform data set; vii) determining the write power used to write the identified portion and storing that write power as an optimum write power setting; and viii) setting the write power to the optimum write power setting.

The present invention utilizes only a few predetermined tracks in the centre of the optical disk for write power calibration. These tracks are preallocated for this operation. The centre of the disk is chosen as it more effectively represents the actual writing operations for data storage. Further, by choosing the middle, media variations are avoided that are typically encountered near the edges of the disks (the center or outside edge).

According to the second aspect of the present invention, there is provided a write power optimization system for an optical data storage system having an optical storage disk, drive control electronics and a data writing laser, the write power optimization system comprising: i) memory for storing a predetermined write power calibration data pattern to be written to the optical storage disk and predetermined performance characteristics for the data storage system; and ii) a controller coupled to the memory, the laser and the drive electronics to perform a calibration routine, wherein the calibration routine includes writing a predetermined calibration data pattern to an optical storage device using a plurality of write power settings, wherein the predetermined calibration data pattern includes a plurality of segments and each of the plurality of segment is written using a different write power setting, the data calibration routine further including reading the predetermined calibration data pattern and analyzing the read calibration data pattern to determine a waveform characteristic for each segment of the predetermined calibration data pattern, the controller for further comparing the waveform characteristic for each segment with a target waveform characteristic and selecting the segment having a waveform characteristic closest to the target waveform characteristic, the controller for then determining the write power value used to write the selected segment and setting the write power to the determined write power value.

Within these predetermined calibration tracks, the present invention utilizes a predefined data pattern which contains only 3T and 2T patterns of RLL 1, 7 Code. Specifically, alternating sections of AAAA (hex) and EEEE (hex) provide both the 3T and 2T patterns respectively. By using these predetermined patterns, write power calibration can be effectively carried out while writing to only one data sector.

The above referenced data patterns are written in a predetermined manner in order to effectively perform write power calibration. Specially the present invention writes to various frames in a single data sector while varying the write power. This write power variations is recorded so that its results can be analyzed. Preferably the write power is varied around a predicted power value or within a predetermined power range.

As mentioned, only one data sector is utilized for this write power calibration function. This provides optimum use of storage media by limiting the amount of disk space is used during each calibration operation. In a write-once drive, this is extremely important since any data written to the disk cannot be overwritten.

To calibrate the drive, the write power is varied during the writing of the predetermined pattern. In order to provide effective use of the limited amount of disk space used, the power is varied in a predetermined manner. By controlling the power variations, two desirable effects can be achieved. First, a data pattern is written which will appropriately allow for further analysis. Secondly, the power variations can be easily tracked while writing the predetermined data pattern. In one embodiment of the invention, a power range is first determined. To begin the actual power variation process, the system sets the power level to its maximum within this power range. Throughout the writing process, the power is then stepped down to its lowest value. In order to produce useful information while undergoing this power variation, the system insures that constant power is maintained while writing certain frames. For example, the system will insure that write power is constant at its set level while writing each odd frame, while allowing the power to be changed while writing the even frames. This type of writing pattern is required due to the speed at which data is being written. Consequently, each odd frame will provide a stable written signal which then can be used for further signal analysis. By varying the write power in this manner, an entire preselected write power range can easily be covered while writing the single data sector.

After this predetermined pattern has been written to the identified sector, the data from that sector is then read. In this read phase peak amplitude values are provided at the output, as opposed to decoded data. These amplitude values can then be processed to determine the optimum write power for the drive. More specifically, these amplitude values provide an indication of the data writing quality of the system. Appropriate analysis will result in the most optimum data writing.

Specific data patterns having both 3T and 2T patterns are chosen in order to simplify the process of determining optimum write power. As is well known, signals containing the 2T pattern produce the highest frequency waveforms. At the same time, the waveforms produced by the 2T patterns have the lowest peak amplitude. Similarly, waveforms produced by data with a 3T pattern have a slightly lower frequency, and a higher peak amplitude. By comparing the waveforms produced by the two predefined patterns, information about the optimum write power can be obtained.

In order to determine an optimum write power, a symmetry value is determined by comparing the 2T and 3T waveforms. This symmetry value is an indication of the relationship between the 2T and 3T waveforms. More specifically, the symmetry value indicates how the 2T waveform aligns with the 3T waveform. Changing write power will cause the relationship between these 3T and 2T signals to change. An optimum write power can be obtained by comparing the symmetry value with the drive manufacturer's specifications.

When the predetermined patterns are read, the firmware within the system allows for preconditioning of these waveforms. That is, the amplitudes can be averaged over a few channel bit samples in order to reduce the effects of noise or media defects.

By appropriate sorting and processing the waveform data obtained from each frame, an average symmetry value can be calculated. As mentioned above, the symmetry value is an indicator of the relationship between signals and is typically calculated by comparing the smaller 2T waveforms with the larger 3T waveforms. By optimizing this symmetry value for the particular media, write power is also at its optimum level.

Once an average symmetry value for each frame within the single data sector is calculated, a controller can determine which frame has a symmetry value closest to the target value. A target symmetry value for the particular media used is established by the manufacturer and is stored by the controller. Once the frame is identified which has the optimum or target symmetry value, its corresponding write power is determined.

Using the write power level corresponding to optimum symmetry, the system can further be adjusted for sensitivity variations. It is fairly well known that the sensitivity for the medium will vary from the inner to outer radius. Write sensitivity values are typically prewritten into certain sectors on the media in order to account for these variations. Utilizing this write sensitivity information, the controller can determine the optimum write power for all data zones extending from the inner radius to the outer radius.

Preferred embodiments of the present invention seek to provide a system and method for accomplishing write power calibration which is accurate and also efficiently utilizes this space.

Furthermore the present invention advantageously provides an efficient write power calibration method which effectively operates with write once optical drives. This efficiency is obtained by utilizing very small amounts of data storage space on the disk.

For a better understanding of the invention, and to show how the same may be carried into effect, reference will now be made, by way of example, to the accompanying drawings, in which:-
Figure 1 is a schematic diagram illustrating the disk control system of the present invention;
Figure 2 is a flow chart illustrating the process of write power calibration of the present invention; and
Figure 3 is a conceptual drawing showing the write patterns used and the resulting readout signals.

The present invention preferably provides an efficient and effective method for performing write power calibration (WPC) which minimizes the media consumption. Consequently, the method and apparatus is extremely beneficial for performing WPC with write once optical disk drives due to minimum use of media space.

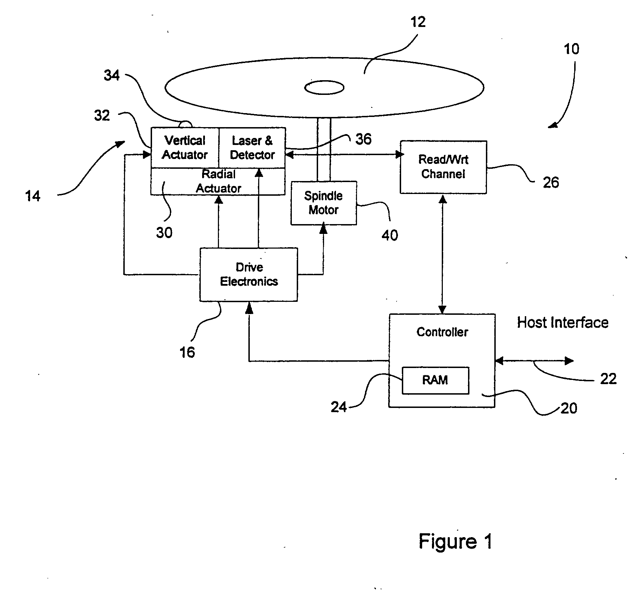

Referring now to Figure 1, there is shown a schematic diagram of the disk storage system 10 which must periodically perform write power calibration (WAC). One core component of storage system 10 is an optical media 12. Optical media 12 could include an optical disk, however is not necessarily limited to that type of storage media. Disk storage system 10, necessarily has a read/write system 14 incorporated therein for writing data to the optical media 12 as well as reading data therefrom. Storage system 10 further includes drive electronics 16 for operating the functions of the drive. Also associated is a drive controller 20 which includes a memory or RAM 24. Interacting with the output from read/write head 14 is a read/write channel 26 which necessarily includes an internal decoder (now shown). Read/write channel 26 is capable of producing either decoded or nondecoded data and providing this data to controller 20.

It will be understood that many variations could be incorporated into this component hardware. Also, various functions may be undertaken by controller 20 or may be controlled by other components. As seen in Figure 1, controller 20 can be in communication with many other devices via host interface 22.

Read/write head 14 includes various components which efficiently accommodate its operation. Specifically, a radial actuator 30 is included for accommodating motion for read/write system 14. Also, a vertical actuator 32 is included to move appropriate components closer to the surface of optical media 12 when necessary. Vertical actuator 32 may also be referred to as a focus motor as it typically moves a focusing lens 34 into its optimum position. Lastly, read/write system 14 includes a laser and detector 36 for appropriately producing optical signals for use in either writing or reading to the optical media. This laser and detector system cooperates with the light signals produced to detect data which has already been written to optical media 12.

Also included is a spindle motor 40 for controlling the rotational movement of optical-media 12. Drive electronic 16 cooperate with all of these components to appropriately coordinate their functions and provide reading and writing capabilities.

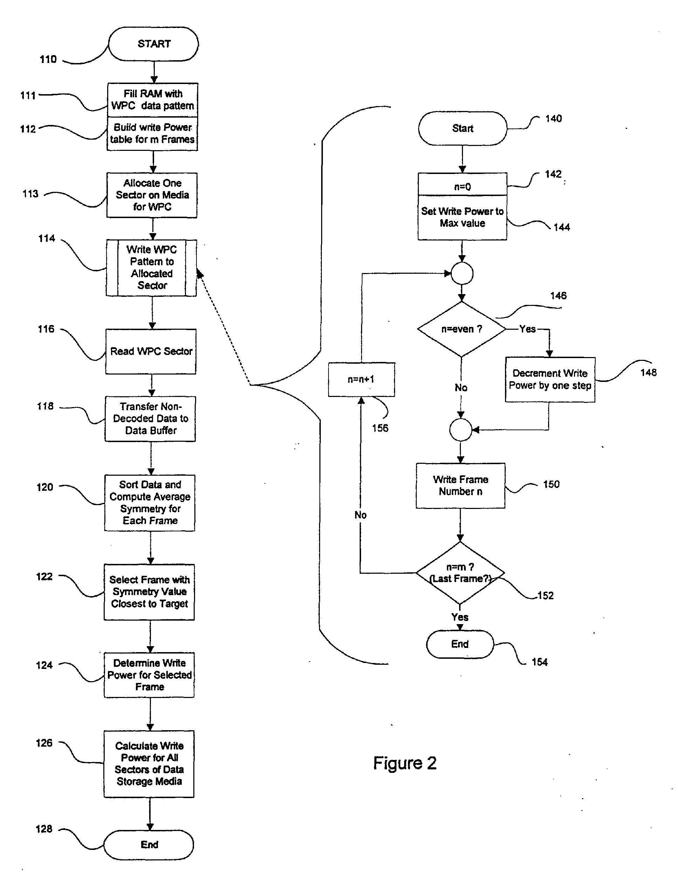

Referring now to Figure 2, there is shown a flow chart outlining the overall calibration process 100 of write power calibration or WPC undertaken by the present invention. It is generally understood that WPC is required any time the disk drive undertakes a writing function. Consequently, when a command is issued to write to the data media, this process will be initiated prior to the actual data writing processes. Alternatively, this process may be issued at any appropriate time as directed by controller 20.

Referring specifically to Figure 2, this process is initiated at starting point 110, as outlined above. In order to appropriately set up this system to carry out the necessary functions, ram 24 is first loaded with the WPC pattern in step 111. Next, in step 112, a write power table for m frames is built in step 112. Typically a desired or target power will be known based upon the manufacturer's specifications. Further, a desired write power range will typically be known, which provides variations from the default write power level. Using these known values, the desired write power range can easily be set. Using this write power range, the above-mentioned write power table is put together which establishes all of the various write power steps that will be taken during the writing process. Next, the present invention allocates one sector on the media for this WPC operation as shown in step 113. The disk will generally have a number of sectors allocated for use only by the various WPC steps. This allocation typically occurs when the drive is first set up. Preferably, a few of the center rings of the disk is chosen for this WPC operation. The center rings or middle radius is preferred because it is more representative of the actual user area than the space on the edges of the disk. Also, the center rings or middle radius is much less likely to have defects in the media surface, consequently providing a more reliable area upon which to write data.

Next, a predetermined WPC pattern is written to the allocated sector on the media in step 114. As further outlined below, this writing process is predetermined to provide optimum calibration while also minimizing on media consumption. The WPC write process 114 which writes the predetermined WPC pattern is further outlined in Figure 2 at steps 140 - 154.

As initiated by step 114, the process of varying the write power level while writing a predetermined data pattern is initiated at step 140. In step 142, a counter "n" is set to zero in order to track the particular frames being written. Next, in step 144, the write power is set to its maximum value. As previously mentioned, a write power table has been established for m frames. This write power table is utilized the process in setting the various power levels. Next, in step 146, the present invention determines if it is writing to an odd or even frame. If writing to an odd frame, the process moves directly to step 150 wherein that frame is written at the present write power setting.

If, in step 146 the process determines that it is writing to an even frame, step 148 is then utilized to adjust the power level setting. More specifically, the write power is decremented by one "step," again using the previously mentioned write power table. Subsequently, at step 150 the new frame (does n = m) is now written. In step 152, the system determines whether or not it is writing to the last frame. The system will know how many frames are in each sector by utilizing the frame value m. By comparing this frame value with the counter n, the system can determine if it is in reality writing to the last frame. If it was the last frame that was just written, the system is then ended at step 154. Alternatively, if this is not the last frame, the process moves to step 156 wherein the counter is incremented by one step. Next, the same process is repeated. Specifically, the steps of determining odd or even frames (146), appropriately adjusting power (148) and writing to the frame (150) is then undertaken. This is repeated until the entire data sector is written.

In summary, this process appropriately varies the write power level while writing all frames in the allocated data sector. In the particular process that is outlined, the write power is adjusted immediately prior to writing all even frames. Typically, there is a delay time required before the power level will be stable. This delay time often overlaps with the writing of the even frames, thus producing somewhat unstable data patterns. However, by the time the subsequent odd frame is to be written, the write power level has stabilized. Consequently, the WPC data pattern written into the odd frames will be stable and reliable data for purposes of write power evaluation.

As can be appreciated, the write power could be varied in many other ways. For example, the write power could start at its max value, progressively step down to a minimum value, and then reverse, progressively turning to the max value once again.

After the WPC pattern has been written in the allocated sector, the overall calibration process 100 moves on to the WPC read process shown in step 116 wherein the WPC sector is read. The information read in step 116 is then transferred to the data buffer in step 118. However, rather than transferring the typical decoded data (such as that typically read in a data storage operation), non-decoded data is provided to the data buffer. That is, analog signal information is provided. This non-decoded data provides information regarding the actual written patterns in the WPC sector. This non-decoded data can be averaged or reconditioned over a few channel bit samples in order to eliminate the effects of noise and media defects. Next, in step 120, controller 20 can sort the data in a data buffer and calculate an average symmetry value for each frame within the data sector.

As further outlined below, the symmetry value is an indication of how signals are being written to the optical media. This symmetry value is very helpful in determining the optimum write power. By writing the predetermined patterns, this symmetry value can easily be calculated and determined.

Once all of the symmetry values are calculated for each frame, the controller can then determine which frame has a symmetry value closest to the target, and identify or select that frame. This selection is made in step 122 after the symmetry value is determined. Next, in step 124 the controller then reads the actual write power level that was used for the selected frame. This provides the optimum write power for writing to the data media.

As previously mentioned, the WPC data pattern is written on a track at the middle radius of the disk. It is well known that the sensitivity of optical disks can vary from an inner radius to an outer radius. Disk manufacturers provide information on this sensitivity variation when the particular disk is provided, thus allowing for optimum disk writing. In step 126, the sensitivity variation can be taken into account, thus allowing the controller to determine an optimum write power for all sectors of data storage media 12. More specifically, the controller can calculate an optimum write power for the entire range of the disk including the inner radius to the outer radius.

Once the optimum write power for the entire disk is calculated, the calibration process 100 is done and ends at step 128. Now, the optical disk drive is calibrated and ready to write data to whichever portion of the disk which has been identified.

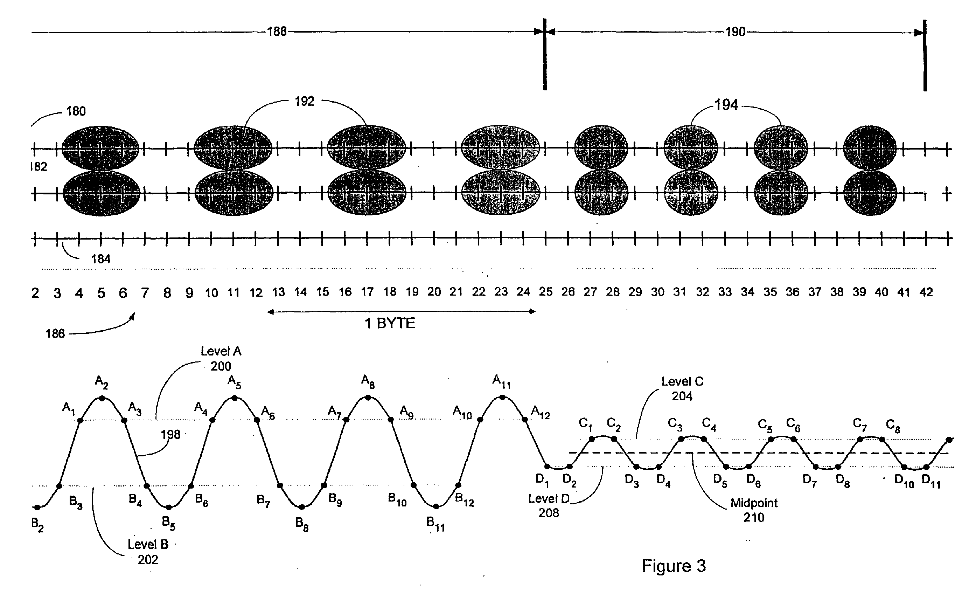

Referring now to Figure 3, there is shown a timing diagram which provides more detail regarding the actual data pattern used and the calculation of the symmetry value. In the preferred embodiment of the present invention, data is recorded in a 1, 7 run-length-limited code (RLL 1, 7 code). As is well known, this code contains several data patterns including the 2T pattern and the 3T pattern. The 2T pattern provides the highest frequency signal possible in this code. The 3T pattern (and other patterns) provide signals at a lower frequency.

Figure 3, shows three data tracks, a first data track 180, a second data track 182 and a third data track 184. As can be seen, first data track 180 and second data track 182 already have a data pattern written thereon. More specifically, the predetermined WPC pattern (a 3T pattern, followed by a 2T pattern) has been written thereon. These waveforms will be sampled in order to perform the write power calibration as outlined above. For reference, a specific clock period 186 are marked thereon. As can be seen, in a first section 188, the 3T pattern is shown. Alternatively, in a second section 190, the 2T pattern is shown. As can be seen, the marks or spots 192 in first section 188 are sized to cover three clock periods and are spaced three periods apart. Similarly, the marks 194 in section 190 are configured to cover two clock periods and are spaced two clock periods apart. These are well known characteristics of the 3T and 2T waveforms.

When reading out this 3T and 2T patterns, a very predictable waveform 198 is produced. At each clock period, the waveform is sampled, as indicated by the dots on waveform 198. From processing these dots, Level A 200, Level B 202, Level C 204 and Level D 208 are determined. As can be seen, data points A₁, A₂ ... A₁₂ provide the basis for determining Level A 200. Similarly, data point B₁, B₂ ... B₁₂ provide the basis for determined Level B 202. Likewise, data point C₁, C₂ ... C₈ provide any basis for determining Level C 204. Lastly, data point D₁, D₂ ... D₈ provide the basis for determining Level D 208.

Next, a midpoint 210 for the 2T pattern is determined. As can be seen, this midpoint is simply calculated by adding the value of Level C and B together and subsequently dividing by two. To determine a symmetry value, this midpoint 210 is compared with Levels A and B. If midpoint 210 fits exactly between Level A 200 and Level B 202, the symmetry value is equal to 50%. Should the midpoint 210 move up or down relative to Levels A and B, the symmetry value will respectively go up and down as well.

It is well established that symmetry values are dependent upon the write power of the laser. Consequently, if the write power is increased, the symmetry value goes up (greater than 50%). Likewise, if the write power is decreased, the symmetry value goes down (less than 50%). By determining the symmetry value for various levels of write power, an optimum write power can be determined. This optimum write power is that which produces the most desirable symmetry value.

The target symmetry value, or desired symmetry value may vary for different drives. This varied target is primarily dependent on the optical spot quality and the mechanical tilt alignment of the particular drive. Generally, this target symmetry value is predetermined by the manufacturer and is stored in the drive electronics. Consequently, the controller can easily determine the target symmetry value and appropriately calibrate new write power as desired.

Those skilled in the art will further appreciate that the present invention may be embodied in other specific forms without departing from the spirit or central attributes thereof. In that the foregoing description of the present invention discloses only exemplary embodiments thereof, it is to be understood that other variations are contemplated as being within the scope of the present invention. Accordingly, the present invention is not limited in the particular embodiments which have been described in detail therein. Rather, reference should be made to the appended claims as indicative of the scope and content of the present invention.

## Claims

1. A method of performing calibration of an optical storage system, comprising the steps of:
i) setting the write power of a data writing element to a default value;
ii) writing a first portion of a predetermined calibration data set to the optical storage media in a predetermined manner;
iii) modifying the write power of the data writing element to a predetermined value;
iv) writing a second portion of the predetermined calibration data set to the optical storage media in the predetermined manner;
v) reading the predetermined calibration data set and storing a waveform data set for each portion of the predetermined calibration data set;
vi) analyzing the waveform data set and identifying which portion thereof most closely matches an optimum waveform data set;
vii) determining the write power used to write the identified portion and storing that write power as an optimum write power setting; and
viii) setting the write power to the optimum write power setting.

2. A method according to claim 1, wherein the data storage media is an optical disk.

3. A method according to claim 2, further comprising the step of calculating an optimum write power setting for each region of the disk based upon predetermined sensitivity data.

4. A method according to any preceding claim, wherein the predetermined calibration data set includes data having both a 2T pattern and a 3T pattern.

5. A method according to claim 4, wherein the waveform data includes a first waveform produced by the 2T pattern data and a second waveform produced by the 3T pattern data, wherein the first waveform has a first amplitude and the second waveform has a second amplitude, the first amplitude being smaller than the second amplitude.

6. A method according to claim 5, wherein the first waveform has a first frequency and the second waveform has a second frequency, the first frequency being higher than the second frequency.

7. A method for calibrating the write power of an optical data system, comprising the steps of:
i) writing a predetermined calibration data pattern to an optical storage device using a plurality of write power settings, wherein the predetermined calibration data pattern includes a plurality of segments and each of the plurality of segments is written using a different write power setting;
ii) reading the predetermined calibration data pattern and storing a waveform data set corresponding to the predetermined calibration data pattern;
iii) analyzing the waveform data set to determine a waveform characteristic for each segment of the predetermined calibration data pattern;
iv) comparing the waveform characteristic for each segment with a target waveform characteristic and selecting the segment having a waveform characteristic closest to the target waveform characteristic;
v) determining the write power value used to write the selected segment and designating that write power value as the optimum write power value; and
vi) setting the write power to the optimum write power value.

8. A method according to claim 7, wherein each segment of the predetermined data pattern includes at least two data patterns.

9. A method according to claim 8, wherein the two data patterns include a 2T data patterns and a 3T data pattern.

10. A method according to claim 9, wherein the 2T data pattern produces a first waveform and the 3T data pattern produces a second waveform.

11. A method according to claim 10, wherein the first waveform has a first amplitude and the second waveform has a second amplitude and wherein the second amplitude is greater than the first amplitude.

12. A method according to any one of claims 7 to 11, wherein the waveform data set characteristic is the symmetry value for the segment.

13. A method according to claim 10 or 11, wherein the waveform data set characteristic is determined by comparing the first waveform and the second waveform.

14. A method according to any one of claims 7 to 13, wherein the optical storage device is an optical disk.

15. A method according to claim 14, further comprising the step of a calculating a specific write power calibration value for each of a plurality of regions optical disk.

16. A write power optimization system for an optical data storage system having an optical storage disk, drive control electronics and a data writing laser, the write power optimization system comprising:
i) memory for storing a predetermined write power calibration data pattern to be written to the optical storage disk and predetermined performance characteristics for the data storage system; and
ii) a controller coupled to the memory, the laser and the drive electronics to perform a calibration routine, wherein the calibration routine includes writing a predetermined calibration data pattern to an optical storage device using a plurality of write power settings, wherein the predetermined calibration data pattern includes a plurality of segments and each of the plurality of segment is written using a different write power setting, the data calibration routine further including reading the predetermined calibration data pattern and analyzing the read calibration data pattern to determine a waveform characteristic for each segment of the predetermined calibration data pattern, the controller for further comparing the waveform characteristic for each segment with a target waveform characteristic and selecting the segment having a waveform characteristic closest to the target waveform characteristic, the controller for then determining the write power value used to write the selected segment and setting the write power to the determined write power value.

17. A write power optimization system of claim 16 further comprising a read/write channel for transmitting data between the laser and the controller.

18. A method for optimizing the write power setting for an optical storage system having an optical storage disk, comprising:
i) allocating a data sector on the optical storage disk for use in write power calibration operations;
ii) writing an optimization data pattern to the allocated data sector of the optical storage disk according to a predetermined data table, wherein the predetermined data table specifies a specific data pattern and a corresponding power setting for each frame within the data sector,
iii) reading the written optimization data pattern from the allocated data sector; sorting the read data pattern to identify a plurality of frame waveforms, wherein each frame waveform corresponds to the data pattern written to one frame;
iv) analyzing the frame waveforms and identifying an optimum frame having the frame waveform which most closely matches a target waveform;
v) determining from the predetermined data table, an optimum write power value used to write the optimization data pattern to the optimum frame; and
vi) adjusting the write power setting for the optical storage system to match optimum write power value.
